# EUROPEAN PATENT APPLICATION

(11) **EP 1 667 448 A1**
(43) Date of publication of application: **07.06.2006**
(21) Application number: 04090477.3
(22) Date of filing: 02.12.2004
(51) Int. Cl.: H04N 5/92, H04N 7/08, H04N 5/45

(54) **Method and apparatus for encoding and for decoding a main video signal and one or more auxiliary video signals**

(71) Applicant: DEUTSCHE THOMSON-BRANDT GMBH, 78048 Villingen-Schwenningen (DE)
(72) Inventor: Herpel, Carsten, 30974 Wennigsen (DE); Adolph, Dirk, 30952 Ronnenberg (DE); Hörentrup, Jobst, 30163 Hannover (DE); Ostermann, Ralf, 30657 Hannover (DE); Janssen, Uwe, 30926 Seelze (DE); Peters, Hartmut, 30890 Barsinghausen (DE); Schewzow, Andrej, 30163 Hannover (DE); Winter, Marco, 30173 Hannover (DE)
(74) Representative: Hartnack, Wolfgang

(57) **Abstract**

Normally, digital PIP video signals are directly edited into the main video signal and then encoded jointly into a single coded video stream. However, in order to give a user full control over the PIP presentation of the encoded video signals, each PIP signal requires a separate encoding, and in a receiver one video decoder is required for each video stream displayed. According to the invention, a PIP-like presentation of timeline-related auxiliary video signals is enabled, achieving this with only one coded video stream and therefore a single video decoder. When encoding, the video plane is logically split into a main video area and a side panel area that carries one or more PIP windows. After decoding, the main video area is displayed centred or stretched to the full display size. The content of the side panel is not displayed directly but, depending on side information, some portions of that side panel are overlaid on the main video window. Because the PIP video signals are no longer hard-coded into the main video window, the user has control over showing or hiding each one of the PIP video signals.

## Description

The invention relates to a method and to an apparatus for encoding and for decoding and presenting a main video signal and one or more auxiliary video signals.

### Background

Normally, picture-in-picture (PIP) presentation of digitally encoded video signals on a display requires one video decoder for each displayed video stream. In TV broadcast applications this is unavoidable because the different video signals are usually unrelated. However, in the context of a storage medium such as an optical disc, all content is already known at authoring time. If the main video stream and the auxiliary PIP video streams have a joint timeline, it is therefore state of the art to directly edit the auxiliary PIP video signals into the primary video and then encode them jointly into a single coded video stream. The auxiliary video signals that are presented in predefined locations on the screen may then be used as 'video menu buttons' in order to switch the current main video to one of the other video streams as pre-viewed in the video menu buttons. A typical application would be switching a scene between different camera angles in a multi-angle storage medium, as shown for example in US-A-2004/0126085.
It is known from 3D graphics design that still image textures for various different objects in a scene can be transmitted jointly in a single image, e.g. a JPEG image.

### Invention

Main disadvantage of that solution is that any combination of a main video signal and a set of one or more auxiliary PIP-type video signals needs to be pre-authored. It is not possible to switch off the PIP-like video signals unless an additional version of the main video, not including the PIP video signals, is additionally put on disc, effectively doubling the storage capacity required for that main video.

A problem to be solved by the invention is to enable a picture-in-picture video display using a single video decoder only, and to encode the related video signals correspondingly. This problem is solved by the methods disclosed in claims 1 and 3. An apparatus that utilises the corresponding method is disclosed in claims 2 and 4.

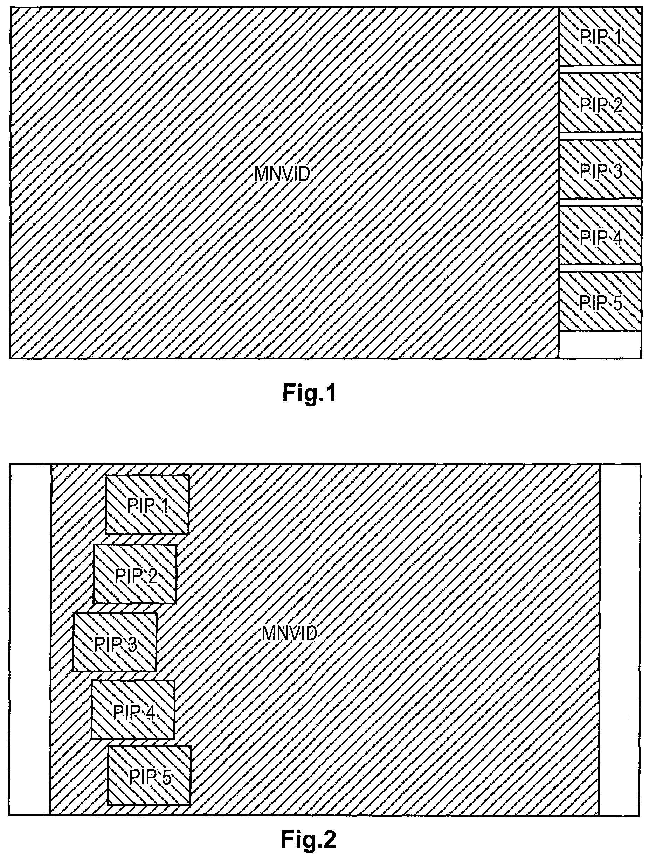

According to the invention:
- a PIP-like presentation of timeline-related auxiliary video signals is enabled;
- thereby giving a user control over presentation of the PIP-like signals;
- while still achieving this with only one coded video stream.
   Especially in case of high-resolution video it becomes possible to sacrifice some main video resolution for the optional PIP video signals. The video plane having e.g. 1920* 1080 pixels is logically split into a main video window MNVID of e.g. 1680*1080 pixels and a side panel of 240*1080 pixels carrying one or more PIP windows PIP1 to PIP5 as depicted in Fig. 1.
   After decoding, the main video window MNVID is displayed e.g. centred as depicted in Fig. 2, or stretched or scaled to the full 1920*1080 display size. Depending on the chosen display option, the aspect ratio of the decoded pixels (prior to scaling) would either be square (in the centred display) or not.
   The video content of the side panel is not displayed directly but, depending on the side information, some portions of that side panel are overlaid on the main video window MNVID. This side information contains information on the logical content of the side panel video, e.g. 1 to 6 auxiliary video signals of size 240*160 pixels, as well as the desired scaling and placement of each of these auxiliary video signals on top of the main video as depicted in Fig. 2.

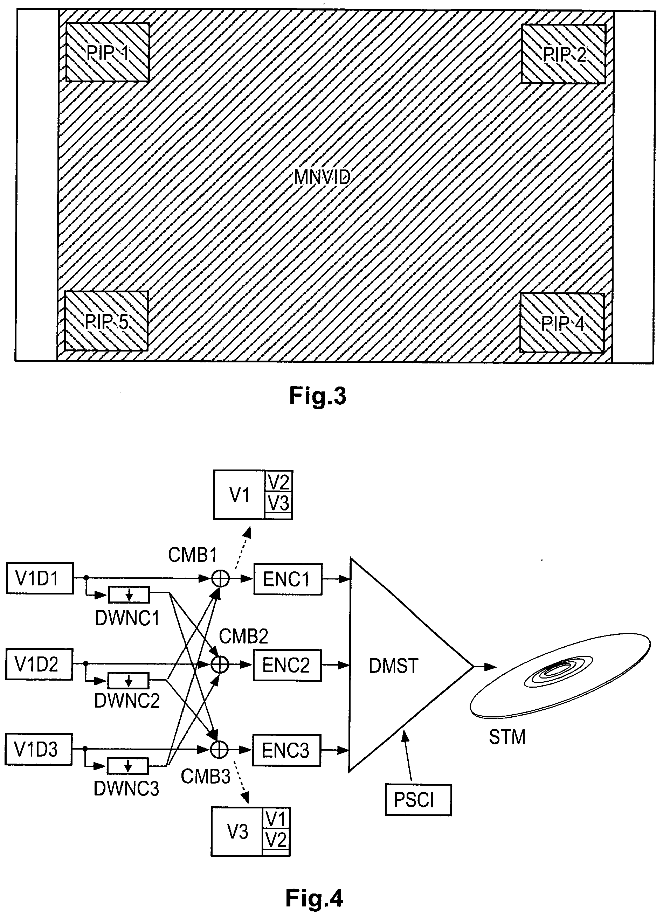

Due to the fact that the PIP-like video signals are no longer 'hard coded' into the main video window, the user has control over showing or hiding each one of these additional video signals. Additionally, the user may be enabled to control the positioning or scaling of the PIP windows at any location of the display as shown for example in Fig. 3.
None of these operations requires a separate video stream to be decoded and presented, as is the case in the prior art. Hence, a show, a hide, a scaling or a re-positioning operation neither incurs a time delay, i.e. a pausing of the video playback, nor does it require additional storage space.

On the encoder side, it is advantageous to constrain the location and size of the main video signal and the auxiliary (PIP) video signals such that their boundaries coincide with boundaries of the entities encoded by the codec, typically blocks or macroblocks of size such as 16*16 pixels. Furthermore, temporal prediction that is applied in most co-decs to date, can be constrained such that for a given block or macroblock only prediction data from the same logical signal is used. I.e., a macroblock belonging to the main video area is only predicted from pixels belonging to the main video area. The same is true for each one of the PIP signals.

In principle, the inventive method is suited for encoding a main video signal and one or more auxiliary video signals, including the steps:
- arranging said main video signal such that it is related to a main part only of a predetermined image area;
- arranging said one or more auxiliary video signals such that they are related to the remaining part of said predetermined image area;
- encoding together said main video signal and said one or more auxiliary video signals to provide a single encoded video signal;
- generating position and scale information about said one or more auxiliary video signals;
- combining the data for said single encoded video signal with the data for said encoded position and scale information for providing a combined data stream that can be mastered for a storage medium.

In principle the inventive apparatus is suited for encoding a main video signal and one or more auxiliary video signals, said apparatus including:
- means being adapted for arranging said main video signal such that it is related to a main part only of a predetermined image area, and for arranging said one or more auxiliary video signals such that they are related to the remaining part of said predetermined image area;
- means being adapted for encoding together said main video signal and said one or more auxiliary video signals to provide a single encoded video signal;
- means being adapted for generating position and scale information about said one or more auxiliary video signals;
- means being adapted for combining the data for said single encoded video signal with the data for said encoded position and scale information for providing a combined data stream that can be mastered for a storage medium.

In principle the inventive method is suited for decoding a main video signal and one or more auxiliary video signals and for presenting said main video signal and none or more of said auxiliary video signals, wherein said main video signal was originally arranged such that it was related to a main part only of a predetermined image area and said one or more auxiliary video signals were arranged such that they were related to the remaining part of said predetermined image area, said method including the steps:
- receiving a combined data stream from a storage medium, said combined data stream including data for said main video signal and said one or more auxiliary video signals;
- decoding with a single decoder said main video signal and said one or more auxiliary video signals to provide a decoded main video signal and one or more decoded auxiliary video signals;
- capturing from said combined data stream position and scale information data about said one or more auxiliary video signals;
- composing said decoded main video signal and none or more of said decoded auxiliary video signals using said position and scale information data.

In principle the inventive apparatus is suited for decoding a main video signal and one or more auxiliary video signals and for presenting said main video signal and none or more of said auxiliary video signals, wherein said main video signal was originally arranged such that it was related to a main part only of a predetermined image area and said one or more auxiliary video signals were arranged such that they were related to the remaining part of said predetermined image area, said apparatus including:
- means being adapted for receiving a combined data stream from a storage medium, said combined data stream including data for said main video signal and said one or more auxiliary video signals, and comprising a single decoder decoding said main video signal and said one or more auxiliary video signals to provide a decoded main video signal and one or more decoded auxiliary video signals;
- means being adapted for capturing from said combined data stream position and scale information data about said one or more auxiliary video signals;
- means being adapted for composing said decoded main video signal and none or more of said decoded auxiliary video signals using said position and scale information data.

Advantageous additional embodiments of the invention are disclosed in the respective dependent claims.

### Drawings

Exemplary embodiments of the invention are described with reference to the accompanying drawings, which show in:
Fig. 1 logical data structure for main video pictures and PIP pictures as stored on a medium;
Fig. 2 first example for presenting the PIP pictures as replayed;
Fig. 3 second example for presenting the PIP pictures as replayed;
Fig. 4 generation of multiple video streams with emulated PIP pictures;
Fig. 5 decoding, compositing and displaying a main image together with PIP pictures;
Fig. 6 hiding PIP pictures when displaying a main image;
Fig. 7 block diagram of a compositor.

### Exemplary embodiments

In Fig. 4 e.g. three video image or video image sequence source stages VID1, VID2 and VID3 generate three different source main video pictures. Each one of these stages feeds its output signal to a corresponding combiner CMB1, CMB2, CMB3, respectively, and to a corresponding down converter DWNC1, DWNC2, DWNC3, respectively, that forms a corresponding PIP picture thereof. The combiners can combine a main video picture with one or more of the PIP pictures stemming from the other video image or video image sequence source, such that the PIP data are arranged adjacent to the corresponding main image data, e.g. in a way like is depicted at the top and at the bottom of this figure. The output signals of combiners CMB1, CMB2 and CMB3 pass through respective video encoders ENC1, ENC2 and ENC3 and are thereafter used in a disc mastering stage DMST for combining these encoded video data with related PIP position and scale information data items and eventually with button command data, for mastering a storage medium STM. The button command data can be used in a corresponding storage medium player for jumping to source picture VIDₙ as the main picture displayed if a button showing PIP picture VIDₙ is activated by a user, wherein n=1 to 3 in this example. The video encoders use e.g. MPEG-1, MPEG-2, MPEG-4, MPEG-4/AVC or VC-1 encoding.

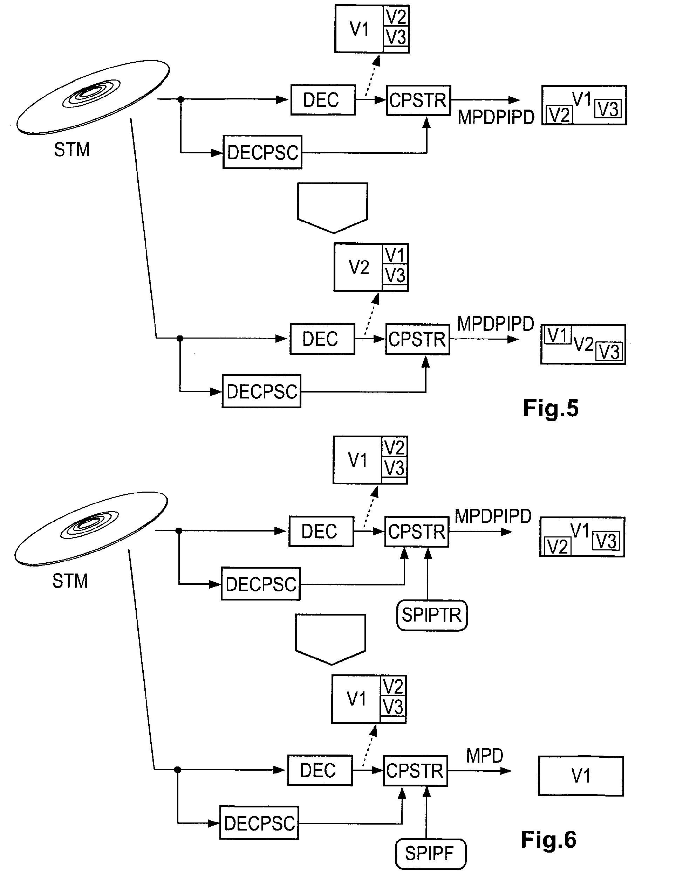

In Fig. 5 a block diagram for decoding, compositing and displaying a main image together with PIP pictures is shown. Using a pick-up and a channel decoder (not depicted), data including the encoded main picture data and the PIP picture data are read from a storage medium STM. A single video decoder DEC decodes the encoded picture data including the main picture data and the PIP picture data, arranged as depicted at the top of figures 4 and 5. Video decoder DEC uses the corresponding type of decoding, i.e. MPEG-1, MPEG-2, MPEG-4, MPEG-4/AVC or VC-1 decoding. The related PIP position and scale information data items are decoded in a position and scale decoder DECPSC. That decoder, and eventually a button command data decoder (not depicted), provide a compositor CPSTR with corresponding information items. The compositor CPSTR includes a buffer storing the decoded frame, applies these information items to the decoded video data and outputs the main picture and PIP picture data MPDPIPD arranged in a way as desired by a user. The processing for overlaying the PIP-like video signals can be carried out either by fast block move operations within the frame buffer or, in case of a display process with multiple video layers available, by moving the PIP video data to another layer for display.
The upper half of Fig. 5 shows the replay processing where V1 is the main picture and V2 and V3 are two PIP pictures, whereas the lower half of Fig. 5 shows the same stages DEC, DECPSC and CPSTR for replay processing after the V2 PIP button has been pressed by the user, where V2 is the main picture and V1 and V3 are two PIP pictures.
The position and scale information data are taken from said storage medium, or are generated or controlled or modified by a user.

In Fig. 6 a block diagram is shown for decoding, compositing and displaying a main image together or not with PIP pictures, i.e. the PIP pictures can be hidden when displaying the main image. Using a pick-up and a channel decoder (not depicted), data including the encoded main picture data and the PIP picture data are read from a storage medium STM. A single video decoder DEC decodes the encoded picture data including the main picture data and the PIP picture data, arranged as depicted at the top of Fig. 6. Video decoder DEC uses the corresponding type of decoding, i.e. MPEG-1, MPEG-2, MPEG-4, MPEG-4/AVC or VC-1 decoding. The related PIP position and scale information data items are decoded in a position and scale decoder DECPSC. That decoder, and eventually a button command data decoder (not depicted), provide a compositor CPSTR with corresponding information items. The compositor CPSTR includes a buffer storing the decoded frame, applies these information items to the decoded video data and outputs the main picture and PIP picture data MPDPIPD arranged in a way as desired by a user. The processing for overlaying the PIP-like video signals can be carried out either by fast block move operations within the frame buffer or, in case of a display process with multiple video layers available, by moving the PIP video data to another layer for display. The compositor receives and evaluates an additional show PIP input signal, which relates to the display status of one or more PIP pictures. The 'true' status SPIPTR of that signal causes display of one or more PIP pictures in the upper half of Fig. 6.
The lower half of Fig. 6 shows the same stages DEC, DECPSC and CPSTR for replay processing after a 'hide PIP' button has been pressed by the user and the compositor receives a show PIP input signal SPIPF the status of which is 'false', where V1 is still the main picture but the V2 and V3 PIP pictures are no more contained in the video data to be displayed.
For each one of the auxiliary video signals it is controlled using the SPIPTR and SPIPF data whether or not it is presented together with the main video signal.

The coded pixel aspect ratio of the PIP video signals depends on the location of the video scaler, if any, in the display process. If the PIP video signals are overlaid before the display buffer is scaled, then both main video and PIP video need to have appropriate non-square pixels. If PIP video is presented in a separate video layer that does not undergo scaling or if the main display buffer is not scaled, then the PIP video must have a square pixel aspect ratio. This assumes that the display device has square pixels, as is the case in the forthcoming display standard with 1920*1080 pixels.

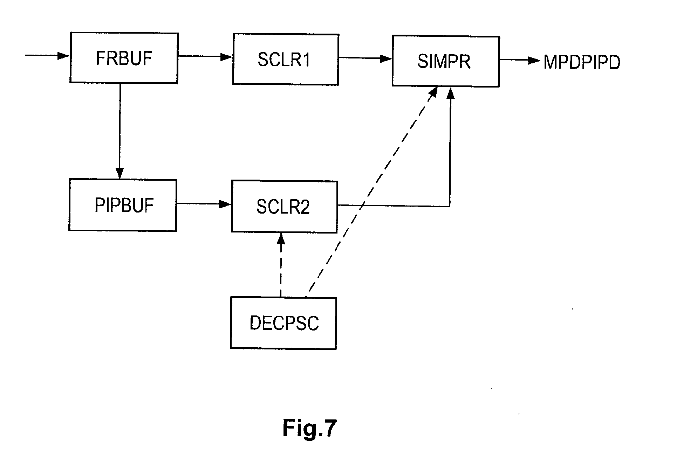

In the more detailed block diagram of the compositor CPSTR in Fig. 7 the decoded video output signal from DEC in figures 5 and 6 is stored into a frame buffer FRBUF. The frame buffer output consisting of the main video signal only passes through a first scaler SCLR1 in which the picture is horizontally and/or vertically extended such that it occupies the full display format, e.g. a 16:9 or a 4:3 format. The decoded PIP picture data are transferred from the frame buffer FRBUF to a PIP buffer PIPBUF the output of which pass through a second scaler SCLR2 in which the PIP pictures, or the PIP picture, are horizontally and/or vertically extended in a degree matching the scaling carried out in the first scaler SCLR1. Alternatively, the scalers SCLR1 and/or SCLR2 are controlled by the user in order to customise scaling of the PIP pictures. A superimposer SIMPR combines the scaled PIP picture data with the scaled main picture data and outputs correspondingly combined picture data MPDPIPD. The second scaler SCLR2 and the superimposer SIMPR receive decoded PIP position and scale information data items from the position and scale decoder DECPSC of figures 5 and 6. Superimposer SIMPR may also receive and evaluate a show or hide PIP input signal SPIPTR or SPIPF as described in connection with Fig. 6.

The invention advantageously facilitates display of optional picture-in-picture video without need for a second video decoder or a duplication of storage space. There is merely a small reduction in horizontal resolution of the main video. The invention can be used in optical recording or a harddisc systems (e.g. DVD, HD-DVD, BD) and requires in a player or receiver only some additional video data transfers prior to display in addition to the simple decoding and display of a single video stream.

## Claims

1. Method for encoding a main video signal (MNVID) and one or more auxiliary video signals (PIP1, PIP2, PIP3), **characterised by** the steps:
- arranging (CMB1, CMB2, CMB3) said main video signal (MNVID) such that it is related to a main part only of a predetermined image area;
- arranging (CMB1, CMB2, CMB3) said one or more auxiliary video signals (PIP1, PIP2, PIP3) such that they are related to the remaining part of said predetermined image area;
- encoding (ENC1, ENC2, ENC3) together said main video signal and said one or more auxiliary video signals to provide a single encoded video signal;
- generating position and scale information (PSCI) about said one or more auxiliary video signals;
- combining (DMST) the data for said single encoded video signal with the data for said encoded position and scale information for providing a combined data stream that can be mastered for a storage medium (STM).

2. Apparatus for encoding a main video signal (MNVID) and one or more auxiliary video signals (PIP1, PIP2, PIP3), said apparatus including:
- means (CMB1, CMB2, CMB3) being adapted for arranging said main video signal (MNVID) such that it is related to a main part only of a predetermined image area, and for arranging said one or more auxiliary video signals (PIP1, PIP2, PIP3) such that they are related to the remaining part of said predetermined image area;
- means (ENC1, ENC2, ENC3) being adapted for encoding together said main video signal and said one or more auxiliary video signals to provide a single encoded video signal;
- means (PSCI) being adapted for generating position and scale information about said one or more auxiliary video signals;
- means (DMST) being adapted for combining the data for said single encoded video signal with the data for said encoded position and scale information for providing a combined data stream that can be mastered for a storage medium (STM).

3. Method for decoding a main video signal (MNVID) and one or more auxiliary video signals (PIP1, PIP2, PIP3) and for presenting said main video signal and none or more of said auxiliary video signals, wherein said main video signal was originally arranged such that it was related to a main part only of a predetermined image area and said one or more auxiliary video signals were arranged such that they were related to the remaining part of said predetermined image area, said method including the steps:
- receiving a combined data stream from a storage medium (STM), said combined data stream including data for said main video signal and said one or more auxiliary video signals;
- decoding (DEC) with a single decoder said main video signal and said one or more auxiliary video signals to provide a decoded main video signal and one or more decoded auxiliary video signals;
- capturing (DECPSC) from said combined data stream position and scale information data about said one or more auxiliary video signals;
- composing (CPSTR) said decoded main video signal and none or more of said decoded auxiliary video signals using said position and scale information data.

4. Apparatus for decoding a main video signal (MNVID) and one or more auxiliary video signals (PIP1, PIP2, PIP3) and for presenting said main video signal and none or more of said auxiliary video signals, wherein said main video signal was originally arranged such that it was related to a main part only of a predetermined image area and said one or more auxiliary video signals were arranged such that they were related to the remaining part of said predetermined image area, said apparatus including:
- means (DEC) being adapted for receiving a combined data stream from a storage medium (STM), said combined data stream including data for said main video signal and said one or more auxiliary video signals, and comprising a single decoder decoding said main video signal and said one or more auxiliary video signals to provide a decoded main video signal and one or more decoded auxiliary video signals;
- means (DECPSC) being adapted for capturing from said combined data stream position and scale information data about said one or more auxiliary video signals;
- means (CPSTR) being adapted for composing said decoded main video signal and none or more of said decoded auxiliary video signals using said position and scale information data.

5. Method according to claim 3, or apparatus according to claim 4, wherein said main video signal is scaled (SCLR1) for said presentation, wherein said scaling is controlled by said position and scale information data.

6. Method or apparatus according to claim 5, wherein said one or more auxiliary video signals are scaled (SCLR2) for said presentation, wherein said scaling is controlled by said position and scale information data.

7. Method according to one of claims 3, 5 and 6, or apparatus according to one of claims 4 to 6, wherein for each one of said one or more auxiliary video signals it is controlled (SPIPTR, SPIPF) whether or not it is presented together with said main video signal.

8. Method according to one of claims 3 and 5 to 7, or apparatus according to one of claims 4 to 7, wherein a present auxiliary signal is used as a user button for capturing from said storage medium, decoding and presenting a different main signal (V2) that corresponds to said present auxiliary signal and for presenting said different main signal instead of the current main signal (V1).

9. Method according to one of claims 3 and 5 to 8, or apparatus according to one of claims 4 to 8, wherein said position and scale information data are taken from said storage medium, or are generated or controlled or modified by a user.

10. Method according to one of claims 1, 3 and 5 to 9, or apparatus according to one of claims 2 and 4 to 9, wherein said storage medium is a DVD, HD-DVD, or BD disc.
